# EUROPÄISCHE PATENTANMELDUNG

(11) **EP 1 172 634 A1**
(43) Veröffentlichungstag der Anmeldung: **16.01.2002**
(21) Anmeldenummer: 01117062.8
(22) Anmeldetag: 13.07.2001
(51) Int. Cl.: G01C 21/34, G08G 1/0968

(54) **Verfahren zur Berechnung von wenigstens einem Routenvorschlag**

(30) Priorität: 15.07.2000 DE 10034465
(71) Anmelder: ROBERT BOSCH GMBH, 70442 Stuttgart (DE)
(72) Erfinder: Duckeck, Ralf, 31137 Hildesheim (DE)

(57) **Zusammenfassung**

Es wird ein Verfahren zur Berechnung von wenigstens einem Routenvorschlag vorgeschlagen, wobei Straßennetzdaten, Fahrplandaten und aktuelle Verkehrsdaten verwendet werden. Liegt eine Haltestelle günstig auf der Route zu einem eingegebenen Ziel, dann ermittelt das Navigationsgerät einen geeigneten Parkraum in der Nähe der Haltestelle und optimiert diesen Parkraum bezüglich der Zeit, in dem die Fahrzeit zu dem Parkraum die Weglänge vom Parkraum zu der Haltestelle, die Abfahrtszeit und die Fahrzeit in die Berechnung eingehen. Dem Benutzer gibt das Navigationsgerät die Abfahrtszeiten und gegebenenfalls die Umsteigemöglichkeiten des öffentlichen Personennahverkehrs aus. Neben den aktuellen Verkehrsdaten werden auch die Fahrplandaten aktualisiert.

## Beschreibung

### Stand der Technik

Die Erfindung geht aus von einem Verfahren zur Berechnung von wenigstens einem Routenvorschlag nach der Gattung des unabhängigen Patentanspruchs.

Es sind bereits dynamische Navigationssysteme bekannt, wobei in eine Routenberechnung eines Navigationsgeräts aktuelle Verkehrsdaten, die mittels digitaler Funksignale empfangen werden, berechnet werden. Als digitale Funksignale werden entweder Mobilfunksignale oder digitale Rundfunksignale, wie DAB (Digital Audio Broadcasting) oder TMC (Traffic Message Control) verwendet.

### Vorteile der Erfindung

Das erfindungsgemäße Verfahren zur Berechnung von wenigstens einem Routenvorschlag mit den Merkmalen des unabhängigen Patentanspruchs hat demgegenüber den Vorteil, dass aktuelle Verkehrsdaten und aktuelle Fahrplandaten des öffentlichen Personennahverkehrs mit Straßennetzdaten verknüpft werden, um eine optimale Route mit minimaler Reisedauer als Routenvorschlag zu berechnen. Dabei wird ein Parkraum in der Nähe einer Haltestelle des öffentlichen Personennahverkehrs gesucht, so dass ein Benutzer mit geringem zeitlichem Aufwand von dem Parkraum zu der Haltestelle des öffentlichen Personennahverkehrs gelangen kann. Das erfindungsgemäße Verfahren ist insbesondere bei beschränkten Parkmöglichkeiten während Großveranstaltungen oder in Stadtzentren von Vorteil, da Zeitverluste, die durch die Suche nach geeigneten Parkmöglichkeiten entstehen würden, hierbei vermieden werden.

Durch die in den abhängigen Ansprüchen aufgeführten Maßnahmen und Weiterbildungen sind vorteilhafte Verbesserungen des im unabhängigen Patentanspruch angegebenen Verfahrens zur Berechnung von wenigstens einem Routenvorschlag möglich.

Es ist insbesondere von Vorteil, dass der Benutzer mittels einer Eingabevorrichtung einen Routenvorschlag auswählt, um zu diesem Routenvorschlag standortabhängig Fahrhinweise zu erhalten. Wird nur ein Routenvorschlag von dem Navigationsgerät angeboten, dann bestätigt der Benutzer mittels der Eingabevorrichtung, dass er zu diesem einen Routenvorschlag die Fahrhinweise wiedergegeben haben möchte.

Besonders vorteilhaft ist, dass die aktuellen Fahrplandaten durch empfangene digitale Rundfunksignale, beispielsweise DAB oder TMC, aktualisiert werden. Damit wird die Routen- und Reisedauerberechnung immer auf Basis von aktuellen Daten durchgeführt und bereits vorhandene Infrastruktur, die Fahrplandaten beispielsweise zu stationären Terminals an Haltestellen versendet, kann für den Empfang durch das Navigationsgerät genutzt werden. Die Verkehrsdaten werden mit Daten in Rundfunk- oder Mobilfunksignalen empfangen. Das Navigationsgerät steuert den Empfänger um jeweils die aktuellen Fahrplandaten und die aktuellen Verkehrsdaten zu empfangen.

Daneben ist es von Vorteil, dass das Gebiet um die Haltestelle für den Parkraum einmal durch einen Radius festgelegt wird, was besonders einfach ist, oder durch ein bestimmtes Gebiet, das durch Koordinaten festgelegt ist, was eine bessere Anpassung an die örtlichen Gegebenheiten bietet. Damit kann sich das Gebiet nur auf solche Straßenzüge beziehen, die auch den möglichen Parkraum bieten.

Weiterhin ist es von Vorteil, dass das Navigationsgerät bei der Anwendung des erfindungsgemäßen Verfahrens zur Routenberechnung den Parkraum in der Nähe der Haltestelle des öffentlichen Personennahverkehrs so bestimmt, dass die Fahrtdauer zum Parkraum, die Weglänge vom Parkraum zur Haltestelle, die Abfahrtszeiten und die Fahrzeit mit dem öffentlichen Verkehrsmittel insgesamt minimiert werden. Es wird dabei zunächst die aufgrund der Verkehrslage voraussichtliche Fahrtzeit mit der Fahrzeit mit Verkehrsmitteln verglichen, wobei die aktuelle Uhrzeit die Wartezeit auf das jeweilige Verkehrsmittel bestimmt. Damit wird dem Fahrer ein Optimum an Zeitersparnis geboten.

Weiterhin ist es von Vorteil, dass die Abfahrtszeiten und die Umsteigemöglichkeiten dem Fahrer entweder ausgedruckt oder auf einem persönlichen digitalen Assistenten als dem portablen Gerät überspielt werden, so dass der Benutzer sich diese Abfahrtszeiten und Umsteigemöglichkeiten nicht merken muß. Weiterhin ist es vorteilhafterweise möglich, dass das Navigationsgerät abnehmbar oder als portables Navigationsgerät, beispielsweise für einen Fußgänger, ausgebildet ist.

Schließlich ist es auch von Vorteil, dass das Navigationsgerät zur Durchführung des erfindungsgemäßen Verfahrens einen Empfänger, mittels dessen die digitalen Funksignale empfangbar sind, eine Eingabevorrichtung, einen Prozessor und Mittel zur akustischen und/oder optischen Darstellung aufweist.

### Zeichnung

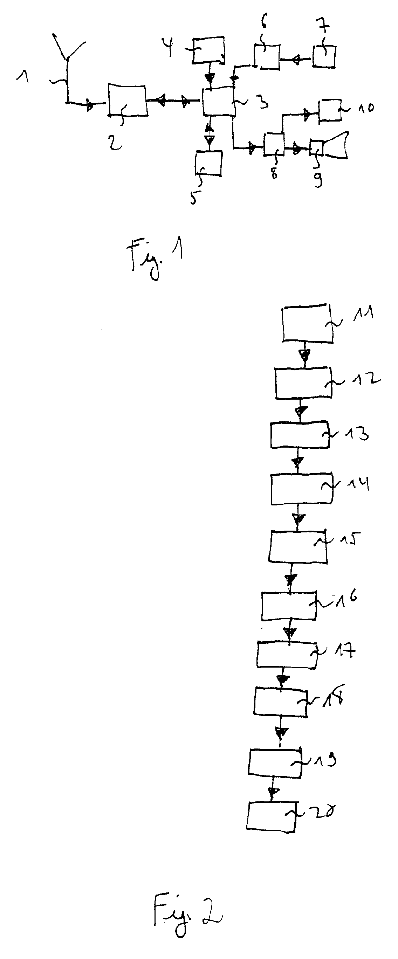

Ausführungsbeispiele der Erfindung sind in der Zeichnung dargestellt und werden in der nachfolgenden Beschreibung näher erläutert. Es zeigt Figur 1 das Navigationsgerät als Blockdiagramm und Figur 2 das erfindungsgemäße Verfahren als Flussdiagramm.

### Beschreibung

Besucher von Großveranstaltungen wie Messen, Konzerten, Schützenfesten oder von Stadtzentren haben ein großes Interesse, möglichst schnell und ohne viel Stress an ihren Zielort zu kommen. Weiterhin stellen sich den Besuchern von solchen Großveranstaltungen die Probleme der Parkraumsuche. Erfindungsgemäß wird daher ein Verfahren zur Berechnung von wenigstens einem Routenvorschlag verwendet, wobei zur Berechnung der Route und der entsprechenden Reisezeit Straßennetzdaten, aktuelle Fahrplandaten über den öffentlichen Personennahverkehr und aktuelle Verkehrsdaten, die in digitalen Funksignalen jeweils empfangen werden, verwendet werden. Das Navigationsgerät sucht dann in der Nähe einer geeigneten Haltestelle einen Parkraum für das Fahrzeug und gibt die Anfahrt zu diesem Parkraum als erste Wegstrecke und als zweite Wegstrecke die Fahrt mit dem öffentlichen Personennahverkehr an. Bei der Berechnung des Parkraums in der Nähe der Haltestelle wird die voraussichtliche Fahrtdauer zu dem Parkraum, die Weglänge vom Parkraum zu der Haltestelle, der aktuellen Uhrzeit und die aktuellen Abfahrtszeiten des öffentlichen Personennahverkehrs von dieser Haltestelle sowie eine Fahrzeit des öffentlichen Personennahverkehrs zu dem Ziel berechnet. Die Abfahrtszeiten und gegebenenfalls auch die Umsteigemöglichkeiten gibt das Navigationsgerät elektronisch oder grafisch aus. Die Routenvorschläge, die das Navigationsgerät ausgibt, sind mittels einer Eingabevorrichtung auswählbar, wobei, falls nur ein Routenvorschlag ausgegeben wird, die Eingabe dann eine Bestätigung bedeutet, dass der Benutzer die Fahrhinweise zu hören beziehungsweise zu sehen wünscht.

In Figur 1 ist als Blockschaltbild das Navigationsgerät zur Durchführung des erfindungsgemäßen Verfahrens zur Routenberechnung für ein Kraftfahrzeug dargestellt.

Eine Antenne 1 ist an einen Eingang eines Empfängers 2 angeschlossen. Über einen ersten Datenein-/ausgang eines Prozessors 3 ist der Empfänger 2 angeschlossen. An einen zweiten Datenein-/Ausgang des Prozessors 3 ist ein Speicher 5 angeschlossen. An einen ersten Dateneingang des Prozessors 3 ist eine Ortungsvorrichtung 4 angeschlossen. An einen zweiten Dateneingang des Prozessors 3 ist eine Signalverarbeitung 6 angeschlossen. Über einen Datenausgang des Prozessors 3 ist eine Signalverarbeitung 8 angeschlossen. An einen Ausgang der Signalverarbeitung 8 ist ein Lautsprecher 9 mit Audioverstärker angeschlossen. Eine Anzeige 10 ist an einen Datenausgang der Signalverarbeitung 8 angeschlossen.

Mittels der Eingabevorrichtung 7, die hier als Tastatur am Frontpanel des erfindungsgemäßen Navigationsgeräts angebracht ist, gibt ein Benutzer seinen Zielort ein. Alternativ ist es möglich, dass die Eingabevorrichtung 7 eine zentrale Eingabevorrichtung für verschiedene Multimediaapplikationen im Kraftfahrzeug ist, wenn beispielsweise ein Auto-PC verwendet wird. Auch die Verwendung einer Spracheingabe oder eines Touchscreens ist möglich, wobei dann die Anzeige 10 mit solch einem Touchscreen ausgestattet ist.

Die Signalverarbeitung 6 wandelt diese Eingabesignale in ein für den Prozessor 3 geeignetes Format um. Der Prozessor 3 sucht für das eingegebene Ziel und den Standort des erfindungsgemäßen Navigationsgeräts, der mittels der Ortungsvorrichtung 4 ermittelt wird, die entsprechenden Straßennetzdaten aus dem Speicher 5, um eine optimale Route zu berechnen. Die Ortungsvorrichtung 4 ist hier ein GPS (Global Positioning System)-Empfänger mit Drehratensensor und der Speicher 5 ein CD-ROM-Laufwerk. Es sind auch andere Ortungsvorrichtungen möglich, beispielsweise ein Mobilfunkgerät oder die Berechnung des Standorts aus empfangenen digitalen Rundfunksignalen. Alternativ ist es möglich, dass anstatt eines CD-ROM-Laufwerks auch ein DVD (Digital Versatile Disk)-Laufwerk oder eine Festplatte verwendet werden.

Der Benutzer macht mittels der Eingabevorrichtung 7 eine Zieleingabe, die von der Signalverarbeitung 6 als für den Prozessor 3 geeignetes Datum zu dem Prozessor 3 übertragen wird. Der Prozessor 3 stellt mittels der Ortungsvorrichtung 4 den Standort des Navigationsgeräts fest und lädt daraufhin Straßennetzdaten aus dem Speicher 5 und ergänzt diesen Datenbestand um aktuelle Verkehrsdaten, die aktuelle Uhrzeit und aktuelle Fahrplandaten über den öffentlichen Personennahverkehr, die jeweils mittels der Antenne 1 und dem Empfänger 2 empfangen werden. Dazu steuert der Prozessor 3 den Empfänger 2 entsprechend, so dass der Empfänger 2 seine Filter so auswählt, dass zu einen die aktuellen Verkehrsdaten in einem Rundfunkprogramm und zum anderen die aktuellen Fahrplandaten über einen Rundfunkversorgungsdienst empfangen werden. Aus diesen drei unterschiedlichen Datenmengen berechnet der Prozessor 3 dann die Route und die Reisedauer zu dem eingegebenen Ziel. Ist der schnellste Weg zu dem Ziel eine reine Autofahrt und sind um das Ziel herum genügend Parkplätze vorhanden, dann gibt das Navigationsgerät eine Route und eine Reisedauer ohne die Verwendung von öffentlichen Nahverkehrsmitteln aus. Der zweite Teil des Routenvorschlags hat dann die Reisedauer von Null.

Ist jedoch eine Kombination aus Autofahrt und der Benutzung von öffentlichen Nahverkehrsmitteln günstiger, dann berechnet der Prozessor 3 unter Berücksichtigung der Fahrtdauer zu einem Parkraum, der Weglänge von dem Parkraum zu der Haltestelle, der Abfahrtszeit und der voraussichtlichen Fahrzeit die gesamte Reisedauer und sucht für unterschiedliche Routen ein Minimum für die Reisedauer. Dabei wird zunächst die voraussichtliche Fahrtzeit mit dem Kraftfahrzeug mit der Fahrtzeit des öffentlichen Verkehrsmittels zu dem eingegebenen Ziel verglichen, um festzustellen, ob die Benutzung des öffentlichen Personennahverkehrs günstiger sein kann.

Der Prozessor 3 zeigt dann wenigstens die Route mit der minimalen Reisedauer auf der Anzeige 10 an. Gegebenenfalls ist es möglich, dass der Prozessor 3 mehrere berechnete Routen mit den jeweiligen Reisedauern auf der Anzeige 10 ausgibt. Die maximale Anzahl wird entweder durch einen abgespeicherten Wert oder durch eine maximale Reisedauer vorgegeben. Dann ist es dem Fahrer möglich, mittels der Eingabevorrichtung 7 eine Route auszuwählen und die entsprechenden standortabhängigen Fahrhinweise mittels der Anzeige 10 und dem Lautsprecher 9 aufzunehmen bzw. zu beachten.

Das Navigationsgerät kann auch einen Bus aufweisen, um die unterschiedlichen Komponenten miteinander zu verbinden. Eine weitere Möglichkeit besteht darin, dass das Navigationsgerät selbst eine Komponente eines Rechners in einem Kraftfahrzeug ist oder gar nur als Softwaremodul realisiert ist.

In Figur 2 ist das erfindungsgemäße Verfahren als Flussdiagramm dargestellt. In Verfahrensschritt 11 macht der Benutzer des Navigationsgeräts eine Eingabe mittels der Eingabevorrichtung 7, um sein Ziel auszuwählen. Der Prozessor 3 sucht für dieses Ziel, ausgehend von dem Standort, den er mittels der Ortungsvorrichtung 4 bestimmt hat, die notwendigen Straßennetzdaten und die vorhandenen Fahrplandaten, um eine Route zu berechnen. Dies geschieht in den Verfahrensschritten 12 und 13. In Verfahrensschritt 14 aktualisiert der Prozessor 3 mittels empfangener digitaler Rundfunksignale, die hier DAB-Signale sind, die Routenberechnung um aktuelle Verkehrsdaten. Für die jeweiligen Verkehrshindernisse werden voraussichtliche Höchstgeschwindigkeiten angenommen, um eine Berechnungsgrundlage für die Überwindung dieser Verkehrshindernisse wie einen Stau zu haben. Darüber hinaus empfängt der Empfänger 2 mittels der Antenne 1 aktuelle Fahrplandaten für den öffentlichen Personennahverkehr. Damit ist es möglich, auf Sonderzüge oder Einschränkungen (Verspätungen) im öffentlichen Personennahverkehr bei der Routenberechnung zu reagieren.

In Verfahrensschritt 15 berechnet der Prozessor 3 mittels der Straßennetzdaten der aktualisierten Fahrplandaten sowie der aktuellen Verkehrsdaten, Routen mit Reisedauer zu dem eingegebenen Ziel. In Verfahrensschritt 16 wird der Parkraum um die ausgewählte Haltestelle bezüglich der Fahrtdauer des Wegs vom Parkraum zur Haltestelle und der Abfahrtszeit optimiert. In Verfahrensschritt 17 werden mehrere Routen, die vom Prozessor 3 zu dem eingegebenen Ziel berechnet wurden, für die Ausgabe vorbereitet. In Verfahrensschritt 18 erfolgt die Ausgabe mittels der Anzeige 10. In Verfahrensschritt 19 trifft der Benutzer mittels der Eingabevorrichtung 7 seine Auswahl. In Verfahrensschritt 20 gibt das Navigationsgerät nach Figur 1 Hinweise mittels der Anzeige 10 und dem Lautsprecher 9 bezüglich der gewählten Route aus. Damit wird der Fahrer zu dem Parkraum geführt, und er erhält als Ausdruck oder als übertragene Daten zu seinem persönlichen digitalen Assistenten die Fahrplandaten, die für ihn notwendig sind, für den öffentlichen Personennahverkehr.

## Patentansprüche

1. Verfahren zur Berechnung von wenigstens einem Routenvorschlag, wobei ein Navigationsgerät mit einem Prozessor (3) für einen Fahrer den wenigstens einen Routenvorschlag zu einem eingegebenen Ziel anhand eines Datenbestandes berechnet, wobei der wenigstens eine Routenvorschlag akustisch und/oder optisch wiedergegeben wird, wobei der Datenbestand mittels Daten in empfangenen Funksignalen erneuert wird, wobei in dem Datenbestand Fahrplandaten über den öffentlichen Personennahverkehr und Straßennetzdaten bevorratet werden, **dadurch gekennzeichnet, dass** aufgrund von Verkehrsdaten und den aktuellen Fahrplandaten, die jeweils in den Daten der digitalen Funksignale empfangen werden und die den Datenbestand ergänzen und erneuern, und den Straßennetzdaten das Navigationsgerät einen Parkraum in einem Gebiet um eine Haltestelle für den öffentlichen Personennahverkehr als einen ersten Teil des wenigstens einen Routenvorschlags und eine Wegstrecke mit dem öffentlichen Personennahverkehr als einen zweiten Teil des wenigstens einen Routenvorschlags ausgibt, wobei das Ziel mittels des öffentlichen Personennahverkehrs erreichbar ist.

2. Verfahren nach Anspruch 1, **dadurch gekennzeichnet, dass** der wenigstens eine Routenvorschlag ausgewählt wird und dass dann Fahrhinweise zu dem ausgewählten Routenvorschlag akustisch und/oder optisch ausgegeben werden.

3. Verfahren nach Anspruch 1 oder 2, **dadurch gekennzeichnet, dass** als die digitalen Funksignale digitale Rundfunksignale empfangen werden.

4. Verfahren nach Anspruch 3, **dadurch gekennzeichnet, dass** als die digitalen Rundfunksignale DAB und/oder TMC-Signale empfangen werden.

5. Verfahren nach einem der Ansprüche 1 bis 4, **dadurch gekennzeichnet, dass** das Gebiet durch einen Radius mit der Haltestelle als Mittelpunkt definiert wird.

6. Verfahren nach einem der Ansprüche 1 bis 4, **dadurch gekennzeichnet, dass** das Gebiet durch Koordinaten definiert wird, wobei die Koordinaten aus einer vorgegebenen Fläche für das Gebiet berechnet werden.

7. Verfahren nach einem der vorhergehenden Ansprüche, **dadurch gekennzeichnet, dass** das Navigationsgerät den Parkraum in dem Gebiet um die Haltestelle unter Berücksichtigung einer voraussichtlichen Fahrtdauer zu dem Parkraum, der Weglänge von dem Parkraum zu der Haltestelle, von aktuellen Abfahrtszeiten des öffentlichen Personennahverkehrs, der aktuellen Uhrzeit und von der Haltestelle und einer Fahrzeit des öffentlichen Personennahverkehrs zu dem Ziel auswählt.

8. Verfahren nach einem der vorhergehenden Ansprüche, **dadurch gekennzeichnet, dass** das Navigationsgerät die Abfahrtszeiten und gegebenenfalls die Umstiegsmöglichkeiten ausgibt.

9. Verfahren nach Anspruch 8, **dadurch gekennzeichnet, dass** die Abfahrtszeiten und gegebenenfalls die Umsteigemöglichkeiten ausgedruckt werden oder zu einem portablen Gerät übertragbar sind.

10. Navigationsgerät zur Durchführung des Verfahrens nach einem der vorhergehenden Ansprüche 1 bis 9, **dadurch gekennzeichnet, dass** das Navigationsgerät mit einem Empfänger für digitale Funksignale und mit Mitteln zur akustischen und/oder optischen Darstellung verbunden ist, und dass das Navigationsgerät einen Prozessor (3) zur Berechnung des wenigstens einen Routenvorschlags und eine Eingabevorrichtung (7) zur Eingabe des Ziels und zur Auswahl des wenigstens einen Routenvorschlags aufweist.
